# EUROPEAN PATENT SPECIFICATION

(11) **EP 0 904 441 B1**
(45) Date of publication and mention of the grant of the patent: **10.05.2000**
(21) Application number: 97928181.3
(22) Date of filing: 10.06.1997
(51) Int. Cl.: D04H 3/14, D04H 3/04, B29D 28/00, B29C 65/14

(54) **GRID COMPRISING POLYMERIC DRAWN STRIPS AND A PROCESS FOR MAKING SAME**
NETZ AUS VERSTRECKTEN POLYMER STREIFEN UND VERFAHREN ZU DEREN HERSTELLUNG
GRILLE COMPRENANT DES BANDES POLYMERES ETIREES ET LEUR PROCEDE DE REALISATION

(30) Priority: 11.06.1996 NL 1003313
(43) Date of publication of application: 31.03.1999
(73) Proprietor: Akzo Nobel N.V., 6824 BM Arnhem (NL)
(72) Inventor: VAN VLIET, Arie, Hendrik, Frans, NL-6815 BN Arnhem (NL); PETERS, Sebastiaan, Martinus, NL-6904 PB Zevenaar (NL)
(74) Representative: Schalkwijk, Pieter Cornelis
(86) International application number: EP9703057
(87) International publication number: WO9747796

(56) References cited:
- EP-A- 0 337 776
- EP-A- 0 416 497
- EP-A- 0 564 189
- WO-A-94/26503
- DE-A- 2 246 051
- DE-A- 4 137 310
- FR-A- 1 506 163
- GB-A- 1 101 762
- GB-A- 2 103 147
- GB-A- 2 262 258
- GB-A- 2 266 540
- US-A- 3 316 687
- US-A- 4 483 438
- US-A- 5 458 711
- PATENT ABSTRACTS OF JAPAN vol. 004, no. 037 (M-004), 27 March 1980 & JP 55 009832 A (SEKISUI JUSHI CO LTD), 24 January 1980,
- DATABASE WPI Section PQ, Week 9349 Derwent Publications Ltd., London, GB; Class P13, AN 93-393503 XP002042846 & SU 1 757 528 A (MELNIKOV E L) , 30 August 1992

## Description

The invention pertains to a grid comprising drawn polymeric strips in at least two different directions, with the strips being bonded together in the zone or zones of overlap.

Such a grid is known from WO 94/26503, which discloses a process for bonding drawn polymeric strips to form, int. al., a grid. At and below the surface of at least one of the strips particles are provided which heat up in an electro-magnetic field having a frequency in the range of 10 to 50.000 MHz. Thus the strips are bonded together in the zone or zones of overlap by being exposed to the said field.

It was found, however, that when such a grid consisting of drawn polymeric strips is subjected to heavy loads, for instance when it is used as a so-called "geogrid" (i.e., a geofabric composed of a grate or grid of longitudinal and transverse strips which is used as soil consolidation in dike bodies, slopes, embankments, and the like), the loaded strips in the grid tend to break more quickly at the bonds than might be expected on the basis of the strength of the strip itself and the bonding technique used.

It is an object of the present invention to avoid this phenomenon of early rupture. This object is achieved in the grid described in the opening paragraph, wherein the said zone comprises at least two spatially separated bonding points or lines, preferably such that the bonding points or lines are separated by an imaginary and straight line running in between and parallel to the sides of one of the strips.

It was found that a single weld or bond covering the entire zone of overlap or most of the zone of overlap results in an unfavourable interaction between the longitudinal and the transverse strips which, in turn, results in the aforementioned early rupture of strips which are heavily loaded. This will now be elucidated with reference to a geogrid.

Use is made of a geogrid in which drawn polymeric strips (12 mm in width, always spaced 30 mm apart) are welded together across their entire contact area at an angle of about 90 degrees. Because the strips are drawn, the molecular chains are predominantly oriented in the longitudinal direction of the strip. As a result of this orientation the strips have a high tensile strength in the longitudinal direction and a low strain to failure in the transverse direction.

Forces exerted on the geogrid result in the strips being subjected to tensile load in both directions. On examination of one of the strips the following was found: under the influence of said tensile force there is a certain elongation of the strip. At the point where this strip and another strip in the transverse direction of the geogrid (from now on "transverse strip") are welded together across their entire contact area, this elongation generates a force transverse to the transverse strip. As was mentioned earlier, it is precisely in this direction that drawn strips have a lower strain to failure. Accordingly, heavier loads will cause the transverse strip to split.

In itself, such a split does not present a major problem to the geogrid. However, because the transverse strip and the loaded strip have been attached to each other across their entire contact surface, the split of the transverse strip will initiate a crack in the loaded strip. This crack in its turn gives rise to the early rupture of the loaded strip.

Separating the welds in the longitudinal direction of the loaded strip will mean, in the above-described situation, that the transverse strip will split between the welds. Once split, the transverse strip because of the separation of the welds is incapable of exerting any force on the loaded strip at the point of this split, and hence cannot cause early rupture of the loaded strip.

It is preferred that the zone of overlap comprises three or more spatially separated and parallel bonding lines. It has been found that, depending on the type of bonding used, the strength of grids which are loaded in a direction perpendicular to these lines can be virtually equal to the sum of the strips' strengths in that direction.

When the weld has separations in both directions of the geogrid, e.g., because there has only been spot welding near the angular points of the contact area, the above-described advantage applies in both directions of the geogrid. This can be of particular relevance in situations where the load to which the geogrid is subjected is likely to be about the same in both directions, or when it is not possible to accurately predict (the direction of) the load.

Preferably, the strips in the grid build an angle with eachother ranging from 70 to 110, more preferably from 80 to 100 degrees, because such grids are comparatively strong and easy to manufacture.

Although the optimal width of the individual welds depends on the process conditions and the materials used and the person skilled in the art is capable of optimising this width without undue experimentation, it is generally preferred that the width of the bonding lines and the width or diameter of the bonding spots or points is 5 mm or less, more preferably 3 mm or less. When the bonding lines or points are too wide, the phenomenon described above may occur within the bonding point or line.

As will be explained in more detail below, a grid in which the bonding points or lines are welded by means of a laser is preferred for a number of reasons.

The invention also pertains to a process for manufacturing the above-described grid in which at least two strips are successively placed one on top of the other, pressed together, and heated by means of a radiation source emitting electromagnetic radiation, wherein the strip which faces the radiation source is transparent to the radiation, while (at least) at the points where the strips are bonded together the material absorbs said radiation.

It was found that by using this technique a very strong weld can be produced quickly (within milliseconds) and economically, and allows great freedom in designing the configuration of the weld, all without influencing the oriented structure of the polymer of which the strips are made (due to very local heating).

The energy supplied to the surface to be bonded preferably is in the range of 20 to 150 kJ/m2. Greater preference is given to quantities in the range of 40 to 110 kJ/m2 or even 60 to 90 kJ/m2. The surface to be bonded preferably is not exposed to the radiation for more than 75 milliseconds or less than 5 milliseconds. When these quantities of energy and the exposure times of the process according to the invention are used, the orientation of the molecular chains suffers minimal disturbance (and, hence, minimal loss of strength) and a bond having very good strength is achieved.

Suitable polymers include thermoplastic polymers such as polyesters, polyamides, and polyolefins. In addition, said radiation may be absorbed either by the polymer itself or by a pigment added to the polymer.

In a very simple embodiment the strip facing the radiation source is made up wholly of transparent material. In that case there are several options. For instance, the strip facing away from the radiation source may be made of an absorbent material. Alternatively, the strips to be bonded can both be transparent, with a (thin) layer, such as a film or foil, of an absorbent material sandwiched between the strips.

It will be evident that, in principle, any configuration can be used as long as there is a material which absorbs the radiation at the point where the bond is to be made and as long as the radiation can reach this material.

Another suitable embodiment is the one in which the strip facing the radiation source is composed of more than one component. For instance, use may be made of a bicomponent strip (width 12 mm; thickness 0.55 mm) of transparent polyester (0.50 mm thick) and polyester to which a pigment has been added (0.02 mm). This strip can be bonded to itself or to another strip in a number of ways, as long as the radiation is able to reach an absorbent section via a transparent section.

One advantage of the use of the multi-component strip is that it can serve both as an exposed and as an unexposed strip. Hence there is no need during production to have two or more supply lines for two or more different materials.

Both the absorbing part of the strip comprising two or more components and the mentioned intermediate layer (foil or film) may have a very small thickness. Preferably, this thickness is in the range of 5 to 100 pm. However, in the selection of this thickness there will have to be taken into account, among others, the degree to which the material absorbs the radiation. In consequence, there is no absolute upper or lower limit.

Preferably, use is made of radiation with a wavelength in the range of 600 to 1600 nm. A large number of often inexpensive and reliable radiation sources is available for this range. Also, there are many pigments on the market which have high absorption in this range, e.g., carbon black.

Lasers are highly suitable for use in the process according to the invention. Unlike in the case of quartz lamps, the radiation emitted by lasers can be focused using comparatively simple means. Moreover, lasers have a narrow spectrum ("wavelength window"), which means that absorption by the transparent polymer can be avoided entirely or almost entirely. Lamps, on the other hand, have a comparatively wide spectrum, so that the emitted radiation will always comprise wavelengths which are absorbed by the transparent polymer. In many cases this not very desired absorption will be as much as about 35% of the total radiation energy. In the case of the invention it holds that this absorption preferably does not exceed 15%.

When the power density can be varied, a lower strength can be selected for the part of the weld at the edge of the zone of overlap than for the part of the weld at and near the centre of the zone of overlap. In this way objectionable marginal phenomena which are known to have a negative effect on the entire weld can be suppressed or eliminated.

The invention will be illustrated by way of an unlimitative example.

Fig. 1 shows two strips joined by means of a weld in accordance with the present invention.

Fig. 2 shows, as a comparative example, two strips joined by a weld covering the entire zone of overlap.

### Examples

Welding is carried out with a solid state or diode laser (OPC-A020-MMM-CS) emitting light at a wavelength of 820 nm. The laser beam is transformed into a line shape having a width of 0.3 mm (Full Width Half Maximum of a Lorentzian intensity distribution) and a length of 6 mm (uniform "top hat" intensity distribution).

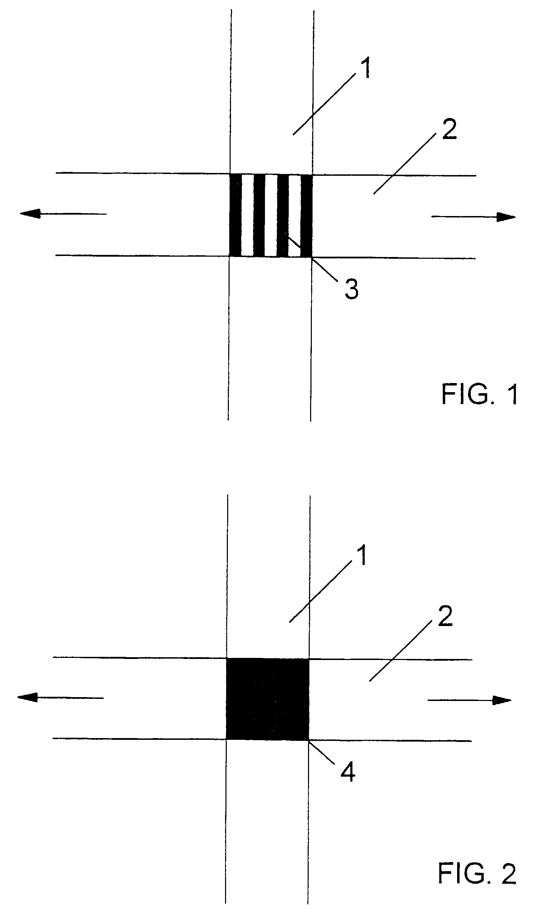

A transparent strip (numeral 1 in Fig. 1 and having a strength of 560 MPa and a cross-section of 12 x 0.55 mm²) of polyethylene terephthalate (PET) and a black strip (2) of the same type with carbon black added to the PET were placed one across the other at an angle of 90° and pressed together using a pressure of 1 megaPascal.

The line shaped beam is scanned across the zone of overlap of the strips at a speed of 2.25 centimeters per second. The laser beam was interrupted using 20 ms intervals, resulting in the bonding lines (3) being spaced 0.45 mm apart.

The procedure was repeated, but this time the weld (4) extended over the entire zone of overlap.

The welding experiments showed that, when cracks developed in the transparent transverse strip (1) during mechanical loading of the longitudinal black strip (numeral 2 in both Figures), the conventional weld (Fig. 2) suffered a large (∼15%) decrease in strength retention of the longitudinal black strip (2), whereas the weld according to the present invention (Fig. 1) suffered no such decrease inspite of the occurrence of cracks.

## Claims

1. A grid comprising drawn polymeric strips in at least two different directions, with the strips being bonded together in the zone or zones of overlap, characterised in that the said zone comprises at least two spatially separated bonding points or lines.

2. A grid according to claim 1, characterised in that the said zone comprises three or more spatially separated and parallel bonding lines.

3. A grid according to claim 1, characterised in that the said zone at least comprises one bonding point or line at or near each of the angular points of the zone of overlap.

4. A grid according to any one of the preceding claims, characterised in that the width of the points or lines is 5 mm or less or, preferably, 3 mm or less.

5. A grid according to any one of the preceding claims, characterised in that the bonding points or lines are welded by means of a laser.

6. A grid according to any one of the preceding claims, characterised in that the strength of the part of each bonding point or line at the edge of the zone of overlap is lower than the strength of the part of each bonding point or line at and near the centre of the zone of overlap.

7. A process for manufacturing the grid according to any one of the preceding claims wherein at least two strips are successively placed one on top of the other, pressed together, and heated by means of a radiation source emitting electromagnetic radiation, wherein the strip which faces the radiation source is transparent to the radiation, while at the points where the strips are bonded together the material absorbs said radiation.

8. A process according to claim 7, characterised in that the strip facing the radiation source is made entirely of transparent material.

9. A process according to claim 7, characterised in that the strip facing the radiation source comprises at least two different materials.

10. A process according to any one of the claims 7-9, characterised in that the radiation source used is a laser.

## Patentansprüche

1. Gitter aus verstreckten Polymerstreifen in mindestens zwei Richtungen, wobei die Streifen im Bereich oder in Bereichen der Überlappung miteinander verbunden sind, dadurch gekennzeichnet, dass dieser Bereich mindestens zwei räumlich getrennte Verbindungspunkte oder -linien aufweist.

2. Gitter nach Anspruch 1, dadurch gekennzeichnet, dass der Bereich drei oder mehr räumlich getrennte und parallel verlaufende Verbindungslinien aufweist.

3. Gitter nach Anspruch 1, dadurch gekennzeichnet, dass der Bereich zumindest einen Verbindungspunkt oder eine Verbindungslinie an jedem oder nahe jedes der Eckpunkt(e) des Überlappungsbereichs aufweist.

4. Gitter nach einem der vorhergehenden Ansprüche, dadurch gekennzeichnet, dass die Größe der Punkte oder die Breite der Linien 5 mm oder weniger, vorzugsweise 3 mm oder weniger ist.

5. Gitter nach einem der vorhergehenden Ansprüche, dadurch gekennzeichnet, dass die Verbindungspunkte oder -linien lasergeschweißt sind.

6. Gitter nach einem der vorhergehenden Ansprüche, dadurch gekennzeichnet, dass die Festigkeit des Teils jedes Verbindungspunktes oder jeder Verbindungslinie im Eckbereich der Überlappung geringer ist als die Festigkeit des Teils jedes Verbindungspunktes oder jeder Verbindungslinie in oder nahe der Mitte des Überlappungsbereichs.

7. Verfahren zur Herstellung des Gitters nach einem der vorhergehenden Ansprüche, worin zumindest zwei Streifen fortlaufend aufeinandergelegt, zusammengepresst und mittels einer elektromagnetische Strahlen emittierenden Strahlungsquelle erhitzt werden, wobei der Streifen, der der Strahlungsquelle zugekehrt ist, strahlendurchlässig ist, während an den Punkten, wo die Streifen miteinander verbunden sind, das Material die Strahlen absorbiert.

8. Verfahren nach Anspruch 7, dadurch gekennzeichnet, dass der der Strahlungsquelle zugekehrte Streifen vollständig aus durchlässigem Material besteht.

9. Verfahren nach Anspruch 7, dadurch gekennzeichnet, dass der der Strahlungsquelle zugekehrte Streifen zumindest zwei unterschiedliche Materialien umfasst.

10. Verfahren nach einem der Ansprüche 7 bis 9, dadurch gekennzeichnet, dass die eingesetzte Strahlungsquelle ein Laser ist.

## Revendications

1. Grille comprenant des bandes polymères étirées dans au moins deux directions différentes, les bandes étant liées les unes aux autres dans la ou les zones de recouvrement, caractérisée en ce que la dite zone comprend au moins deux points ou lignes de jonction séparés dans l'espace.

2. Grille selon la revendication 1, caractérisée en ce que la dite zone comprend trois lignes de jonction ou plus, séparées dans l'espace et parallèles.

3. Grille selon la revendication 1, caractérisée en ce que la dite zone comprend au moins un point ou ligne de jonction à l'endroit de, ou près de chacun des points d'angles de la zone de recouvrement.

4. Grille selon l'une quelconque des revendications précédentes, caractérisée en ce que la largeur des points ou lignes est de 5 mm ou moins ou, de préférence, de 3 mm ou moins.

5. Grille selon l'une quelconque des revendications précédentes, caractérisée en ce que les points ou lignes de jonction sont soudés au moyen d'un laser.

6. Grille selon l'une quelconque des revendications précédentes, caractérisée en ce que la résistance mécanique de la partie de chaque point ou ligne de liaison au bord de la zone de recouvrement, est inférieure à la résistance mécanique de la partie de chaque point ou ligne de liaison à l'endroit de, et près du centre de la zone de recouvrement.

7. Procédé de fabrication de la grille selon l'une quelconque des revendications précédentes, dans lequel au moins deux bandes sont placées successivement l'une sur l'autre, pressées ensemble, et chauffées au moyen d'une source de rayonnement émettant un rayonnement électromagnétique, dans lequel la bande qui fait face à la source de rayonnement est transparente au rayonnement tandis que, à l'endroit des points où les bandes sont liées les unes aux autres, la matériau absorbe le rayonnement.

8. Procédé selon la revendication 7, caractérisé en ce que la bande qui fait face à la source de rayonnement est faite entièrement de matière transparente.

9. Procédé selon la revendication 7, caractérisé en ce que la bande qui fait face à la source de rayonnement comprend au moins deux matières différentes.

10. Procédé selon l'une quelconque des revendications 7-9, caractérisé en ce que la source de rayonnement utilisée est un laser.
